# EUROPÄISCHE PATENTSCHRIFT

(11) **EP 0 340 842 B1**
(45) Veröffentlichungstag und Bekanntmachung des Hinweises auf die Patenterteilung: **29.12.1993**
(21) Anmeldenummer: 89201058.8
(22) Anmeldetag: 24.04.1989
(51) Int. Cl.: G11B 15/675, G11B 15/10

(54) **Magnetbandkassettengerät**
Magnetic-tape cassette apparatus
Appareil à cassette à bande magnétique

(30) Priorität: 30.04.1988 DE 8805726 U
(43) Veröffentlichungstag der Anmeldung: 08.11.1989
(73) Patentinhaber: Philips Patentverwaltung GmbH, 22335 Hamburg (DE); Philips Electronics N.V., 5621 BA Eindhoven (NL)
(72) Erfinder: Kunze, Norbert, D-6332 Ehringhausen (DE)
(74) Vertreter: Kupfermann, Fritz-Joachim, Dipl.-Ing.

(56) Entgegenhaltungen:
- EP-A- 0 080 317
- DE-A- 2 437 966
- FR-A- 2 529 368
- US-A- 4 723 236

## Beschreibung

Die Erfindung bezieht sich auf ein Magnetbandkassettengerät mit einem zum Abspielen von Magnetbandkassetten dienenden Laufwerk, das einen Kassettenlademechanismus aufweist, der mittels eines Lifthebels einen Kassettenschacht mit einer von ihm aufgenommenen Kassette zwischen einer Auswerfposition und einer Spielposition bewegt, wobei ein Kassettenmitnehmer in einer Führung des Lifthebels in der Einzugsrichtung des Kassettenschachtes verschiebbar geführt ist zwischen einer Übernahme- und einer Einzugsstellung und der Kassettenschacht dann, wenn der Kassettenmitnehmer in der Übernahmestellung steht, in die Auswerfposition angehoben ist. Ein solches Gerät ist z.B. aus der US-PS-4 723 236 bekannt.

Laufwerke von Magnetbandkassettengeräten sind mit einem Kassettenschacht versehen, in den eine Kassette von Hand eingeschoben wird. In dem Kassettenschacht kann die Kassette lose ruhen, wenn sie von dem Kassetteneinzug noch nicht übernommen worden ist oder nach dem Spielbetrieb von dem Kassetteneinzug wieder in die Auswerfposition hinausgeschoben wurde.

Der Lademechanismus eines Magnetbandkassettengerätes weist einen Liftmechanismus auf, mit dem der Kassettenschacht mit eingeschobener Kassette aus der Auswerfposition absenkbar ist in die Spielposition und aus dieser wieder anhebbar ist in die Auswerfposition. Das Absenken und Anheben des Kassettenschachtes erfolgt mit Hilfe eines Lifthebels, der um eine horizontale Achse verschwenkbar ist und mit seinem vorderen Ende gelenkig, jedoch lose am Kassettenschacht angreift. Das Absenken oder Anheben des Lifthebels kann mittels einer Steuerstange und einer Kulisse erfolgen, die auf einen Taster des Lifthebels einwirkt.

In der nach unten geschwenkten Stellung des Lifthebels drückt dieser mit seinem freien Ende gegen den Kassettenschacht. In der angehobenen Position, in der sich der Kassettenschacht in der Auswerfstellung befindet, liegen die zusammenwirkenden Gelenkteile von Kassettenschacht und Lifthebel etwa parallel zueinander. In dem Lifthebel ist in Einzugsrichtung ein Kassettenmitnehmer verschiebbar. Dieser Kassettenmitnehmer kann mit einer Nase in ein Wickelloch einer Kassette eingreifen. Durch das Vor- oder Zurückbewegen des Kassettenmitnehmers läßt sich die Kassette in den Kassettenschacht hineinziehen oder aus diesem herausstoßen. Diese Längsbewegung wird mit Hilfe eines Betätigungshebels vorgenommen.

Der Kassettenmitnehmer, im allgemeinen ein Kunststoffspritzteil, muß mit relativ großen Toleranzen in dem Lifthebel geführt sein. Dies hat zur Folge, daß der Kassettenmitnehmer in der Auswerfposition gegenüber dem Lifthebel recht lose liegt und bei Erschütterungen zusammen mit dem Kassettenschacht und Lifthebel Klappererscheinungen verursachen.

Es ist Aufgabe der Erfindung, an einem Magnetbandkassettengerät mit wenigen einfachen Bauteilen Klappererscheinungen des Lademechanismus entgegenzuwirken.

Die gestellte Aufgabe ist erfindungsgemäß dadurch gelöst, daß der Kassettenmitnehmer Federarme aufweist, die in der Übernahmestellung gegen den Lifthebel drücken.

Die Federarme des Kassettenmitnehmers werden bei dieser Bauweise gegen den Lifthebel gedrückt, wodurch der Kassettenmitnehmer gegenüber dem Lifthebel verspannt wird. Durch dieses Verspannen werden Klappergeräusche unterbunden, weil die Teile gegeneinander kein freies Spiel mehr haben.

Nach einer weiteren Ausgestaltung der Erfindung ist vorgesehen, daß der Kassettenmitnehmer an schräg zur Hauptfläche des Lifthebels ausgestellten Teilen des Lifthebels vorbeigeführt ist und daß die Federarme gegen Ränder dieser Teile drücken. Mittels der schräg zur Hauptfläche des Lifthebels ausgestellten Teile verbessert sich das gegenseitige Verspannen.

Nach einer weiteren Ausgestaltung der Erfindung ist vorgesehen, daß in der Übernahmestellung ein Betätigungshebel den Kassettenmitnehmer und die Federarme gegen die Ränder der ausgestellten Teile drückt. Durch den Andruck des Betätigungshebels verstärkt sich die Verspannwirkung der Federarme.

Nach einer weiteren Ausgestaltung der Erfindung ist vorgesehen, daß der Kassettenmitnehmer und seine Federarme in entgegengesetzten Richtungen gegen die ausgestellten Teile drücken. Der Lifthebel wird mithin also praktisch zangenartig eingeklemmt zwischen dem Kassettenmitnehmer und den Federarmen. Dies führt zu einem sehr rüttelsicheren Verspannen.

Nach einer weiteren Ausgestaltung der Erfindung ist vorgesehen, daß die ausgestellten Teile aus einem ausgedrückten Streifen bestehen, unter dem der Kassettenmitnehmer hindurchgeführt ist. Bei einem derartig ausgedrückten Streifen lassen sich die schräg ausgestellten Teile besonders einfach bilden.

Nach einer weiteren Ausgestaltung der Neuerung ist vorgesehen, daß der Kassettenmitnehmer mit seinen Federarmen aus einem Kunststoffspritzteil besteht.

Die Erfindung wird anhand der Zeichnung näher dargestellt. Es zeigen:
- Fig. 1: ein Magnetbandkassettengerät mit einem Lademechanismus und einem Lifthebel in Spielstellung, wobei Federarme eines Kassettenmitnehmers zur Unterdrückung von Klappergeräuschen dienen,
- Fig. 2: das Magnetbandkassettengerät nach Fig. 1 in der Auswerf- oder Entnahmestellung,
- Fig. 3: eine vergrößerte Darstellung des Zusammenwirkens von Kassettenmitnehmer, Federarmen des Kassettenmitnehmers und einem ausgedrückten Streifen des Lifthebels längs einer Linie III-III nach Fig. 2.

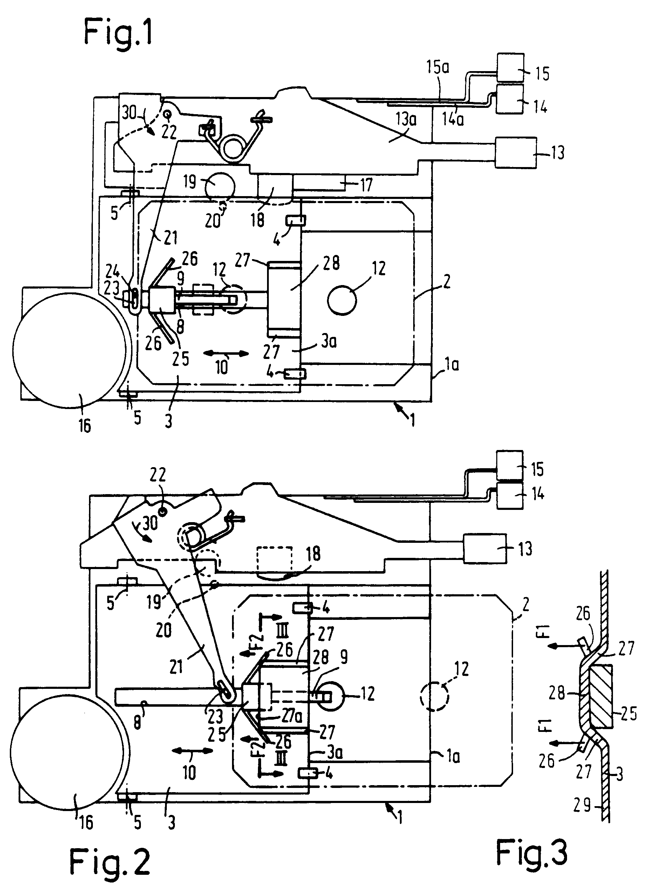

Das in Fig. 1 vereinfacht dargestellte Magnetbandkassettengerät 1 weist einen Kassettenschacht 1a auf, in den eine Kompaktkassette 2 eingeschoben ist. Der Kassettenschacht 1a ist senkrecht zur Zeichenebene absenkbar mit Hilfe eines Lifthebels 3, der mit seinem vorderen Ende 3a unter Überwurflaschen 4 des Kassettenschachtes 1 greift. Der Lifthebel 3 ist um eine Achse 5 verschwenkbar. In dem Lifthebel 3 befindet sich eine Schlitzführung 8, in der ein streifenförmiger Kassettenmitnehmer 9 in Richtung eines Doppelpfeiles 10 verschieblich ist. Der Kassettenmitnehmer 9 ist an seinem vorderen Ende 9a mit einer Nase 11 versehen, die in ein Wickelloch 12 der Magnetbandkassette 2 eingefallen ist.

Zum Durchführen der Laufwerkfunktionen sind Tasten 13, 14, 15 mit Tastenstangen 13a, 14a und 15a vorgesehen. Alle Bewegungen des Laufwerkes werden mit Hilfe eines Motors 16 erzeugt.

Es ist eine Kopfplatte 17 vorgesehen, auf der ein Magnetkopf 18 und eine Andruckrolle 19 angeordnet sind. Die Andruckrolle 19 arbeitet mit einer Tonwelle 20 zusammen.

Es ist weiterhin ein Betätigungshebel 21 vorgesehen, der um eine Achse 22 verschwenkbar ist. Der Betätigungshebel 21 greift an seinem freien Ende mit einem Schlitz 23 über einen Zapfen 24 des Kassettenmitnehmers 9. Die Nase 11 des Kassettenmitnehmers 9 greift dabei in eine der Wickelbohrungen 12 der Kassette ein und hält die Kassette in eingezogener Stellung fest. Der Kassettenmitnehmer 9 übergreift die Führung 8 mit einem Stützklotz 25, an den zwei Federarme 26 angespritzt sind. Der Kassettenmitnehmer 9 mit dem Stützklotz 25 und den Federarmen 26 ist ein einstückiges Kunststoffspritzteil.

Während bei der Darstellung nach Fig. 1 der Kassettenschacht 1a in die Spielstellung abgesenkt ist, ist er bei der Darstellung nach Fig. 2 durch ein Verschwenken des Betätigungshebel 21 in Richtung eines Pfeiles 30 angehoben und die Kassette 2 befindet sich in ihrer Übernahme- oder Auswerfposition. Der Kassettenmitnehmer 9 wurde von dem Betätigungshebel 21 über den Zapfen 24 in die Auswerfposition geschoben, wobei er die Kassette 2 in diese Stellung mitgenommen hat. Während der Kassettenschacht 1a bei der Stellung nach Fig. 1 abgesenkt war bei abgesenktem vorderen Ende 3a des Lifthebels 3, ist in der Darstellung nach Fig. 2 der Kassettenschacht 1a angehoben und der Kassettenschacht 1a und der Lifthebel 3 liegen in weiten Grenzen in parallelen Ebenen parallel zueinander. Bei der Darstellung nach Fig. 2 haben sich die Federarme 26 gegen schräge Ränder 27a eines aus dem Lifthebel 3 ausgedrückten Streifens 28 gelegt, den der Kassettenmitnehmer beim Verschieben teilweise unterfahren hat. Die Federarme verspannen den Lifthebel 3 mit dem Kassettenmitnehmer 9.

Fig. 3 zeigt anhand des Schnittes III-III nach Fig. 2 wie der Kassettenmitnehmer und der Lifthebel 3 bzw. der aus ihm ausgedrückte Streifen 28 gegeneinander verspannt sind. Der Stützklotz 25 drückt von unten gegen den Streifen 28 und die Federarme 26 drücken von oben gegen die schrägen Ränder 27 des Streifens 28. Dadurch kommt ein beidseitiges Andrücken zustande. Der Lifthebel 3 wird also mit seiner Hauptfläche 29, die unter die Überwurflaschen 4 des Kassettenschachtes 1a greift, gegenüber dem Kassettenmitnehmer und dem Kassettenschacht verspannt und Klappergeräusche sind vermieden. Die Verspannkräfte sind in Fig. 2 mit F₂ und in Fig. 3 mit F₁ bezeichnet.

## Patentansprüche

1. Magnetbandkassettengerät (1) mit einem zum Abspielen von Magnetbandkassetten dienenden Laufwerk, das einen Kassettenlademechanismus aufweist, der mittels eines Lifthebels (3) einen Kassettenschacht (1a) mit einer von ihm aufgenommenen Kassette (2) zwischen einer Auswerfposition und einer Spielposition bewegt, wobei ein Kassettenmitnehmer (9) in einer Führung des Lifthebels (3) in der Einzugsrichtung des Kassettenschachtes (1a) verschiebbar geführt ist zwischen einer Übernahme- und einer Einzugsstellung und der Kassettenschacht (1a) dann, wenn der Kassettenmitnehmer (9) in der Übernahmestellung steht, in die Auswerfposition angehoben ist,
dadurch gekennzeichnet, daß der Kassettenmitnehmer (9) Federarme (26) aufweist, die in der Übernahmestellung gegen den Lifthebel (3) drücken.

2. Magnetbandkassettengerät nach Anspruch 1,
dadurch gekennzeichnet, daß der Kassettenmitnehmer (9) an schräg zur Hauptfläche (29) des Lifthebels (3) ausgestellten Teilen (27, 28) des Lifthebels (3) vorbeigeführt ist und daß die Federarme (26) gegen Ränder (27a) dieser Teile (27, 28) drücken.

3. Magnetbandkassettengerät nach Anspruch 1 od 2,
dadurch gekennzeichnet, daß in der Übernahmestellung ein Betätigungshebel (21) den Kassettenmitnehmer (9) und die Federarme (26) gegen die Ränder (27a) der ausgestellten Teile drückt.

4. Magnetbandkassettengerät nach Anspruch 3,
dadurch gekennzeichnet, daß der Kassettenmitnehmer (9) und seine Federarme (26) in entgegengesetzten Richtungen gegen die ausgestellten Teile (27, 28) drücken.

5. Magnetbandkassettengerät nach Anspruch 4,
dadurch gekennzeichnet, daß die ausgestellten Teile (27, 28) aus einem ausgedrückten Streifen bestehen, unter dem der Kassettenmitnehmer (9) hindurchgeführt ist.

6. Magnetbandkassettengerät nach Anspruch 1,
dadurch gekennzeichnet, daß der Kassettenmitnehmer (9) mit seinen Federarmen (26) aus einem Kunststoffspritzteil besteht.

## Claims

1. A magnetic-tape-cassette apparatus (1) comprising a deck for playing a magnetic-tape cassette, which deck comprises a cassette-loading mechanism which by means of a lift lever (3) moves a cassette holder (1a) containing a cassette (2) between an eject position and a play position, a cassette driver (9) being guided in guide means of the lift lever (3) so as to be movable in the loading direction of the cassette holder (1a) between a take-over position and a loading position, and the cassette holder (1a) being in the lifted eject position when the cassette driver (9) is in the take-over position,
characterized in that the cassette driver (9) comprises resilient arms (26) which press against the lift lever (3) in the take-over position.

2. A magnetic-tape-cassette apparatus as claimed in Claim 1,
characterized in that the cassette driver (9) extends along projecting portions (27, 28) of the lift lever (3) which are inclined relative to the main surface (29) of the lift lever (3), and the resilient arms (26) press against edges (27a) of said portions (27, 28).

3. A magnetic-tape-cassette apparatus as claimed in Claim 1 or 2,
characterized in that an actuating lever (21) urges the cassette driver (9) and the resilient arms (26) against the edges (27a) of the projecting portions in the take-over position.

4. A magnetic-tape-cassette apparatus as claimed in Claim 3,
characterized in that the cassette driver (9) and its resilient arms (26) press against the projecting portions (27, 28) in opposite directions.

5. A magnetic-tape-cassette apparatus as claimed in Claim 4,
characterized in that the projecting portions (27, 28) comprise offset strips portions underneath which the cassette driver (9) extends.

6. A magnetic-tape-cassette apparatus as claimed in Claim 1,
characterized in that the cassette driver (9) with its resilient arms (26) is constituted by one injection-moulded plastics part.

## Revendications

1. Appareil à cassette de bande magnétique (1) comportant un mécanisme d'entraînement servant à la lecture de cassettes de bande magnétique, qui comporte un mécanisme de chargement de cassette qui, à l'aide d'un levier de levage (3), déplace un puits à cassette (1a) dans lequel est logée une cassette (2) entre une position d'éjection et une position de lecture, un entraîneur de cassette (9) étant guidé à coulissement dans un guide du levier de levage (3) dans la direction d'introduction dans le puits à cassette (1a), de manière à pouvoir se déplacer entre une position de réception et une position d'introduction et le puits à cassette (1a) étant relevé en position d'éjection lorsque l'entraîneur de cassette (9) est en position de reprise, caractérisé en ce que l'entraîneur de cassette (9) présente des bras élastiques (26) qui s'appuient contre le levier de levage (3) dans la position de reprise.

2. Appareil à cassette de bande magnétique selon la revendication 1,
caractérisé en ce que l'entraîneur de cassette (9) est guidé en regard de parties (27, 28) du levier de levage (3) exposées obliquement par rapport à la surface principale (29) du levier de levage (3) et les bras élastiques (26) sont pressés contre les bords (27a) de ces parties (27, 28).

3. Appareil à cassette de bande magnétique selon la revendication 1 ou 2,
caractérisé en ce que, dans la position de reprise, un levier d'actionnement (21) presse l'entraîneur de cassette (9) et les bras élastiques (26) contre les bords (27a) des parties exposées.

4. Appareil à cassette de bande magnétique selon la revendication 3,
caractérisé en ce que l'entraîneur de cassette (9) et ses bras élastiques (26) sont pressés en sens opposés contre les parties exposées (27, 28).

5. Appareil à cassette de bande magnétique selon la revendication 4,
caractérisé en ce que les parties exposées (27, 28) sont constituées d'une bande surélevée sous laquelle l'entraîneur de cassette (9) est guidé.

6. Appareil à cassette de bande magnétique selon la revendication 1,
caractérisé en ce que l'entraîneur de cassette (9) avec ses bras élastiques (26) est constitué d'une seule pièce de matière plastique moulée par injection.
